# EUROPÄISCHE PATENTANMELDUNG

(11) **EP 0 872 845 A1**
(43) Veröffentlichungstag der Anmeldung: **21.10.1998**
(21) Anmeldenummer: 98103660.1
(22) Anmeldetag: 03.03.1998
(51) Int. Cl.: G11B 33/04, G11B 23/023

(54) **Archivbox zur Archivierung von Datenträgern**

(30) Priorität: 14.04.1997 DE 19715467
(71) Anmelder: Rudolf Wittner GmbH u. Co., D-88316 Isny (DE)
(72) Erfinder: Härle, Fritz, 88316 Isny-Neutrauchburg (DE)
(74) Vertreter: Hoeger, Stellrecht & Partner

(57) **Zusammenfassung**

Um eine Archivbox zur Archivierung von Datenträgern, insbesondere von Ton- oder Bilddatenträgern, oder von Kassetten für solche Datenträger, die einen Archivierungsteil zur Aufnahme der Datenträger bzw. Kassetten umfaßt, derart zu verbessern, daß sie mittels eines oder mehrerer Befestigungselemente so an einer Haltefläche fixierbar ist, daß der Archivierungsteil zur Aufnahme der Datenträger bzw. Kassetten entnommen und an einen anderen Ort gebracht werden kann, ohne das Befestigungselement oder die Befestigungselemente von der Haltefläche zu lösen, wird vorgeschlagen, daß die Archivbox ein Halteteil umfaßt, das mittels mindestens eines Befestigungselementes an einer Haltefläche festlegbar ist, und daß der Archivierungsteil und das Halteteil in mindestens eine Haltestellung bringbar sind, in der der Archivierungsteil lösbar an dem Halteteil gehalten ist.

## Beschreibung

Die vorliegende Erfindung betrifft eine Archivbox zur Archivierung von Datenträgern, insbesondere von Ton- oder Bilddatenträgern, oder von Kassetten für solche Datenträger, die einen Archivierungsteil zur Aufnahme der Datenträger bzw. Kassetten umfaßt.

Solche Archivboxen sind bekannt und werden beispielsweise zur Archivierung von Compact Disks (CDs), Musikkassetten oder Videokassetten verwendet.

Insbesondere sind Archivboxen bekannt, die an einer im wesentlichen horizontalen oder einer im wesentlichen vertikalen Haltefläche mittels eines oder mehrerer Befestigungselemente festlegbar sind.

Nachteilig bei den bekannten Archivboxen ist jedoch, daß sie als Ganzes an der Haltefläche festgelegt sind, so daß die Befestigungselemente, die der Festlegung der Archivbox dienen, gelöst werden müssen, wenn der Archivierungsteil, der die Datenträger oder die Kassetten für die Datenträger aufnimmt, zeitweilig an einen anderen Ort verbracht werden soll.

Der vorliegenden Erfindung liegt daher die Aufgabe zugrunde, eine Archivbox zur Archivierung von Datenträgern oder von Kassetten für solche Datenträger zu schaffen, die mittels eines oder mehrerer Befestigungselemente so an einer Haltefläche fixierbar ist, daß der Archivierungsteil zur Aufnahme der Datenträger bzw. Kassetten entnommen und an einen anderen Ort gebracht werden kann, ohne das oder die Befestigungselemente von der Haltefläche zu lösen.

Diese Aufgabe wird bei einer Archivbox der eingangs genannten Art erfindungsgemäß dadurch gelöst, daß die Archivbox ein Halteteil umfaßt, das mittels mindestens eines Befestigungselementes an einer Haltefläche festlegbar ist, und daß der Archivierungsteil und das Halteteil in mindestens eine Haltestellung bringbar sind, in der der Archivierungsteil lösbar an dem Halteteil gehalten ist.

Das erfindungsgemäße Konzept bietet den Vorteil, daß lediglich das Halteteil der Archivbox mittels eines oder mehrerer Befestigungselemente an der Haltefläche festgelegt ist, während der die Datenträger bzw. Kassetten aufnehmende Archivierungsteil lösbar an dem Halteteil gehalten ist und somit der Archivbox entnommen und an einen anderen Ort gebracht werden kann, ohne daß das oder die das Halteteil an der Haltefläche festlegenden Befestigungselemente von der Haltefläche gelöst werden müssen.

Die erfindungsgemäße Archivbox eignet sich besonders zur Archivierung von Mini-CDs.

Besonders günstig ist es, wenn der Archivierungsteil und das Halteteil in mindestens zwei voneinander verschiedene Haltestellungen bringbar sind. Dadurch ist eine große Flexibilität bei der Fixierung der Archivbox an Halteflächen gegeben.

Wenn das Halteteil in der Haltestellung oder in einer der Haltestellungen an einer im wesentlichen horizontalen Haltefläche festlegbar ist, so kann dadurch die Archivbox auf eine horizontale Unterlage gestellt und an dieser fixiert werden.

Wenn das Halteteil in der Haltestellung oder in einer der Haltestellungen an einer im wesentlichen vertikalen Fläche festlegbar ist, so kann die Archivbox beispielsweise an einer vertikalen Wand aufgehängt werden.

Besonders vorteilhaft ist es, wenn das Halteteil der Archivbox in eine Stapelstellung bringbar ist, in der das Halteteil der Archivbox an einer weiteren Archivbox lösbar gehalten ist. Hierdurch ist es möglich, das Halteteil neben seiner Funktion, die Archivbox an einer Haltefläche zu fixieren, auch dazu zu verwenden, mehrere Archivboxen übereinander zu stapeln.

Die lösbare Verbindung des Halteteils in der Stapelstellung mit der weiteren Archivbox kann beispielsweise so ausgestaltet sein, daß das Halteteil mindestens einen Einschiebefuß aufweist, der in eine in der weiteren Archivbox angeordnete Führungsnut einführbar ist.

Ein sicheres und schnelles Einführen des Einschiebefußes in die Führungsnut wird dadurch möglich, daß sich die Führungsnut längs der Einführrichtung des Einschiebefußes verjüngt.

Alternativ oder ergänzend dazu kann auch vorgesehen sein, daß der Einschiebefuß sich längs der Einführrichtung verjüngt.

Günstig ist es, wenn das Halteteil, solange es nicht an einer Haltefläche festgelegt ist, in eine Aufbewahrungsstellung bringbar ist, in der es lösbar mit dem Archivierungsteil verbunden ist, so daß das Halteteil nicht verloren gehen kann und stets zur Verfügung steht, wenn es zur Fixierung der Archivbox an einer Haltefläche benötigt wird.

Diese Aufbewahrungsstellung kann mit der Haltestellung oder einer der Haltestellungen identisch sein.

Insbesondere bei einer Ausgestaltung der Archivbox, bei der das Halteteil an einer vertikalen Haltefläche festlegbar ist, kann vorgesehen sein, daß der Archivierungsteil in der Haltestellung oder in einer der Haltestellungen an dem Halteteil eingehängt ist.

Der Archivierungsteil kann dadurch sicher und dennoch leicht lösbar in der Haltestellung oder in einer der Haltestellungen an dem Halteteil gehalten sein, daß der Archivierungsteil in der Haltestellung oder in einer der Haltestellungen mit dem Halteteil verrastet ist.

Die Sicherheit dieser Rastvorrichtung läßt sich vorteilhafterweise dadurch erhöhen, daß der Archivierungsteil längs einer Einrastrichtung in die Haltestellung oder in eine der Haltestellungen bringbar ist und daß der Archivierungsteil und das Halteteil jeweils mindestens ein Führungselement aufweisen, wobei die Führungselemente des Archivierungsteils und des Halteteils so zusammenwirken, daß der Archivierungsteil nicht quer zu der Einrastrichtung aus der Haltestellung bringbar ist. Der Archivierungsteil kann in diesem Fall nur längs der Einrastrichtung von dem Halteteil gelöst werden.

Um eine Festlegung an einer Haltefläche mittels eines Befestigungselements zu ermöglichen, weist das Halteteil vorteilhafterweise mindestens ein, vorzugsweise gestuftes, Durchgangsloch zur Aufnahme eines solchen Befestigungselementes auf.

Bei einer bevorzugten Ausgestaltung der erfindungsgemäßen Archivbox umfaßt der Archivierungsteil ein Bodenteil mit einer Aufstellfläche zum Aufstellen der Archivbox auf eine im wesentlichen horizontale Stellfläche.

In diesem Fall kann das Bodenteil in der Haltestellung oder in einer der Haltestellungen an dem Halteteil gehalten sein.

Ein besonders einfacher Zusammenbau des Archivierungsteils aus vorgefertigten Teilen ist möglich, wenn der Archivierungsteil der Archivbox mindestens ein Seitenteil umfaßt, welches mit dem Bodenteil verrastbar ist.

Wenn vorteilhafterweise das Archivierungsteil mindestens zwei Seitenteile umfaßt, deren untere Enden eine Teil-Standfläche des Archivierungsteils beranden, und die Aufstellfläche des Bodenteils zumindest teilweise außerhalb dieser Teil-Standfläche angeordnet ist, erhöht dies die Standsicherheit des Archivierungsteils auf einer horizontalen Stellfläche.

Vorteilhafterweise ist das Bodenteil des Archivierungsteils der Archivbox einstückig ausgebildet.

Ferner umfaßt bei einer bevorzugten Ausgestaltung der erfindungsgemäßen Archivbox der Archivierungsteil ein an einem oberen Ende der Archivbox angeordnetes Deckteil und mindestens ein Seitenteil, das mit dem Deckteil verrastbar ist.

Auch dieses Deckteil kann einstückig ausgebildet sein.

Eine besonders einfache Herstellung und ein besonders unkomplizierter und rascher Zusammenbau des Archivierungsteils ist möglich, wenn der Archivierungsteil ein einstückig ausgebildetes Bodenteil und ein einstückig ausgebildetes Deckteil umfaßt, die beide jeweils mit einem ebenfalls einstückig ausgebildeten Seitenteil verrastbar sind.

Um mehrere Archivboxen übereinander stapeln zu können, ist es von Vorteil, wenn das Halteteil in eine Stapelstellung bringbar ist, in der es an dem Deckteil einer weiteren Archivbox lösbar gehalten ist.

Ferner ist es günstig, wenn die Archivbox mindestens ein Verbindungselement zum Verbinden der Archivbox mit einer in einer horizontalen Richtung neben der Archivbox angeordneten weiteren Archivbox umfaßt. Dadurch wird es möglich, mehrere Archivboxen zu einer größeren, als Ganzes handhabbaren Einheit zusammenzufassen.

Zur Aufnahme eines solchen Verbindungselements kann die Archivbox mindestens eine Verbindungsausnehmung aufweisen.

Günstig ist es, wenn die Archivbox zusätzlich zu der Verbindungsausnehmung mindestens eine Aufnahme zum Aufbewahren eines nicht zur Herstellung einer Verbindung benötigten Verbindungselementes aufweist. Durch diese Maßnahme ist gewährleistet, daß anfänglich oder zeitweilig nicht zur Herstellung einer Verbindung benötigte Verbindungselemente nicht verlorengehen, sondern ohne weiteres zur Verfügung stehen, wenn die Herstellung einer solchen Verbindung gewünscht wird.

Besonders günstig ist es, wenn die Archivbox einen Satz von untereinander verbundenen Verbindungselementen und einen Satz von Aufnahmen aufweist, wobei die Aufnahmen des Satzes von Aufnahmen so relativ zueinander angeordnet sind, daß der Satz von Verbindungselementen unter Erhaltung der Verbindung zwischen den Verbindungselementen von den Aufnahmen aufnehmbar ist. Dadurch ist zum einen ein besserer Schutz gegen den Verlust eines Verbindungselementes gegeben, da der komplette Satz untereinander verbundener Verbindungselemente einen besseren Halt in den Aufnahmen findet und darum seltener aus denselben herausfällt als ein einzelnes, unverbundenes Verbindungselement. Zum anderen kann dann, wenn die Verbindungselemente ohnehin als Satz von untereinander verbundenen Verbindungselementen hergestellt werden, beispielsweise in einem Gießverfahren, darauf verzichtet werden, die Verbindungselemente des Satzes schon bei der Herstellung voneinander zu trennen, also beispielsweise von einem gemeinsamen Gießrest, dem die Verbindungselemente eines Satzes anhängen, zu lösen.

Insbesondere können die Aufnahmen für die Verbindungselemente in einem Bodenteil des Archivierungsteils angeordnet sein.

Weitere Merkmale und Vorteile der Erfindung sind Gegenstand der nachfolgenden Beschreibung und zeichnerischen Darstellung eines Ausführungsbeispiels.

In den Zeichnungen zeigen:
- Fig. 1: eine perspektivische Darstellung einer Archivbox;
- Fig. 2: eine teilweise geschnittene Vorderansicht der Archivbox;
- Fig. 3: eine teilweise geschnittene Seitenansicht der Archivbox;
- Fig. 4: eine perspektivische Darstellung eines Bodenteils der Archivbox, mit Blickrichtung von hinten oben;
- Fig. 5: eine Draufsicht auf das Bodenteil der Archivbox;
- Fig. 6: eine perspektivische Darstellung eines Verbindungsbolzens der Archivbox;
- Fig. 7: einen Längsschnitt durch den Verbindungsbolzen der Archivbox;
- Fig. 8: eine Seitenansicht eines Verbindungsbolzensatzes der Archivbox;
- Fig. 9: eine perspektivische Darstellung eines rechten Seitenteils der Archivbox, mit Blickrichtung von vorne oben;
- Fig. 10: eine perspektivische Darstellung des rechten Seitenteils der Archivbox, mit Blickrichtung von vorne unten;
- Fig. 11: eine Seitenansicht der Innenseite des rechten Seitenteils der Archivbox;
- Fig. 12: eine perspektivische Darstellung eines Deckteils der Archivbox, mit Blickrichtung von hinten oben;
- Fig. 13: eine perspektivische Darstellung eines Deckteils der Archivbox, mit Blickrichtung von vorne unten;
- Fig. 14: eine Draufsicht auf das Deckteil der Archivbox;
- Fig. 15: eine perspektivische Darstellung eines Halteteils der Archivbox, mit Blickrichtung von vorne oben;
- Fig. 16: eine perspektivische Darstellung des Halteteils der Archivbox, mit Blickrichtung von vorne unten;
- Fig. 17: eine Draufsicht auf das Halteteil der Archivbox.

In allen Figuren sind gleiche oder funktional äquivalente Elemente mit denselben Bezugszeichen bezeichnet.

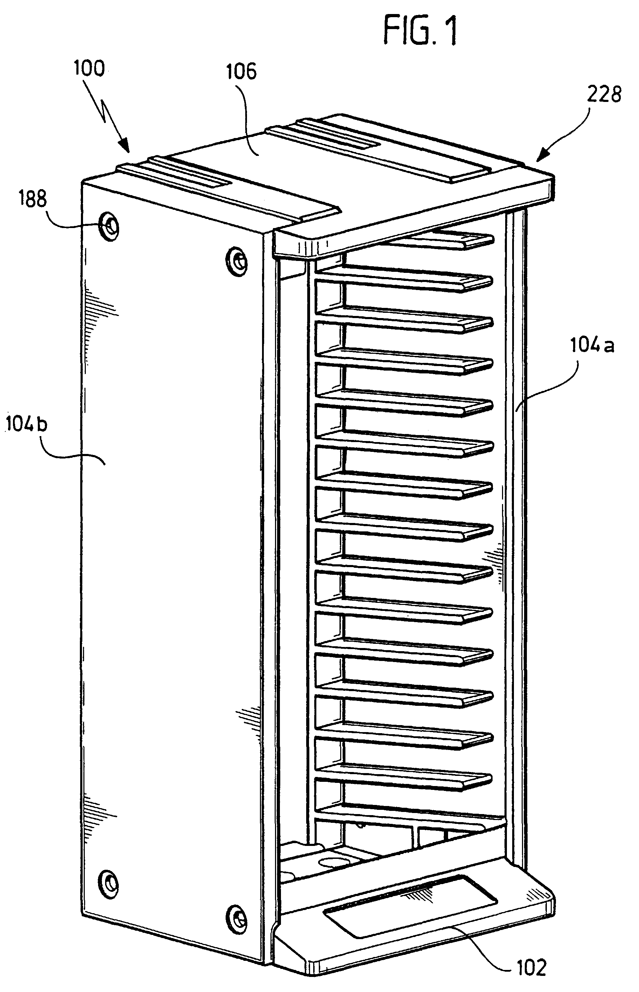

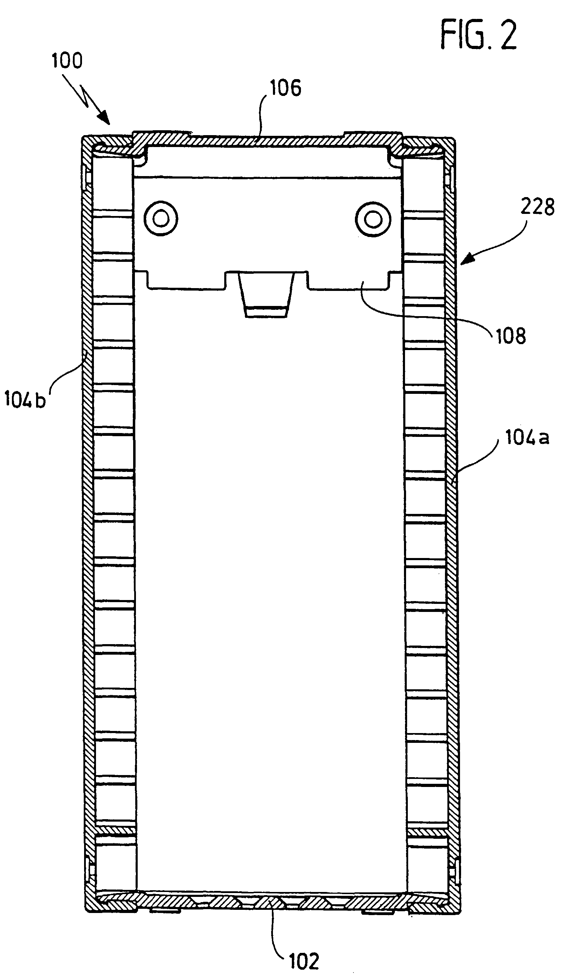

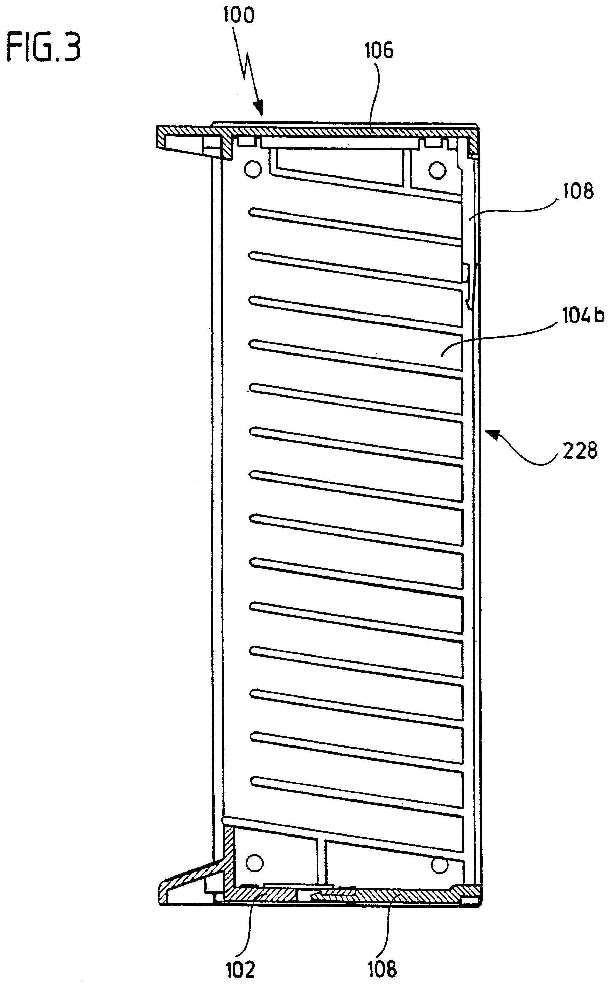

Eine in den Figuren 1 bis 3 dargestellte, als Ganzes mit 100 bezeichnete Archivbox umfaßt ein im wesentlichen plattenförmiges Bodenteil 102, ein im wesentlichen plattenförmiges linkes Seitenteil 104a und ein im wesentlichen plattenförmiges rechtes Seitenteil 104b, die auf einander gegenüberliegenden Seiten des Bodenteils 102 angeordnet und jeweils an einem unteren Ende mit dem Bodenteil 102 verbunden sind, sowie ein ebenfalls im wesentlichen plattenförmiges Deckteil 106, das im wesentlichen parallel zu dem Bodenteil 102 ausgerichtet ist und an zwei einander gegenüberliegenden Seiten jeweils mit einem oberen Ende des linken Seitenteils 104a bzw. des rechten Seitenteils 104b verbunden ist.

Ferner umfaßt die Archivbox ein ebenfalls im wesentlichen plattenförmiges Halteteil 108, das in den Figuren 1 bis 3 in zwei verschiedenen Stellungen gezeichnet ist, nämlich in einer Aufschiebestellung, in der das Halteteil 108 im wesentlichen parallel zu dem Bodenteil 102 ausgerichtet und mit demselben lösbar verbunden ist, und in einer Aufhängestellung, in der das Halteteil 108 im wesentlichen senkrecht zu dem Deckteil 106 und den Seitenteilen 104a, 104b zwischen den Seitenteilen 104a, 104b angeordnet ist und das Deckteil 106 und damit die mit dem Deckteil 106 verbundenen Seitenteile 104a, 104b sowie das Bodenteil 102 trägt.

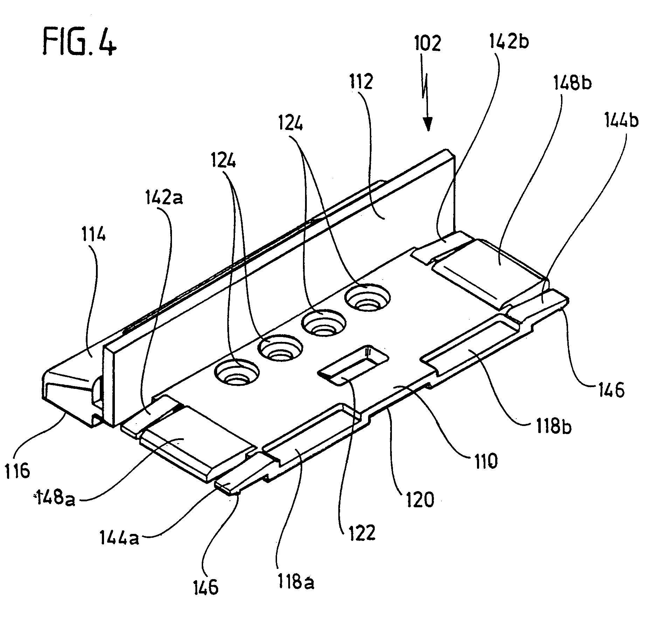

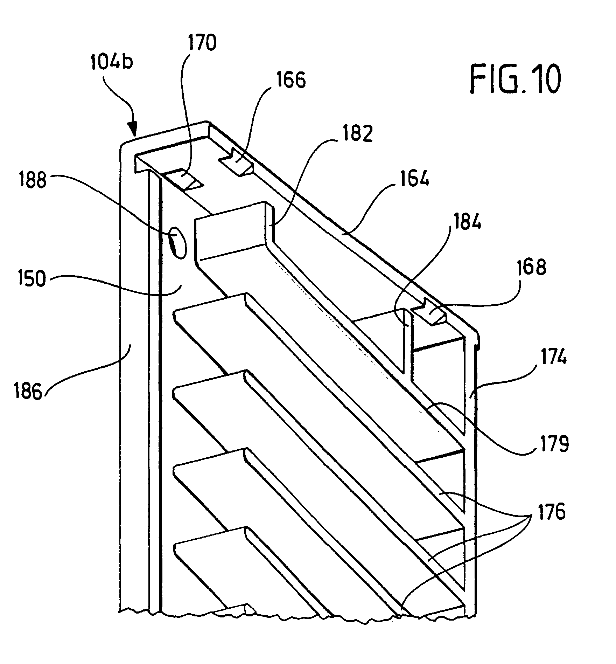

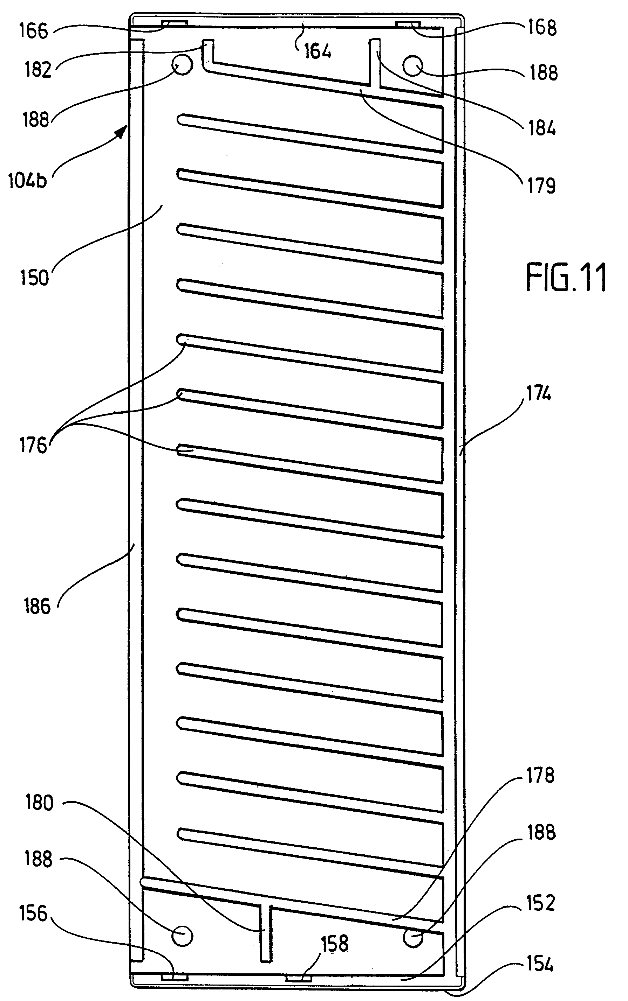

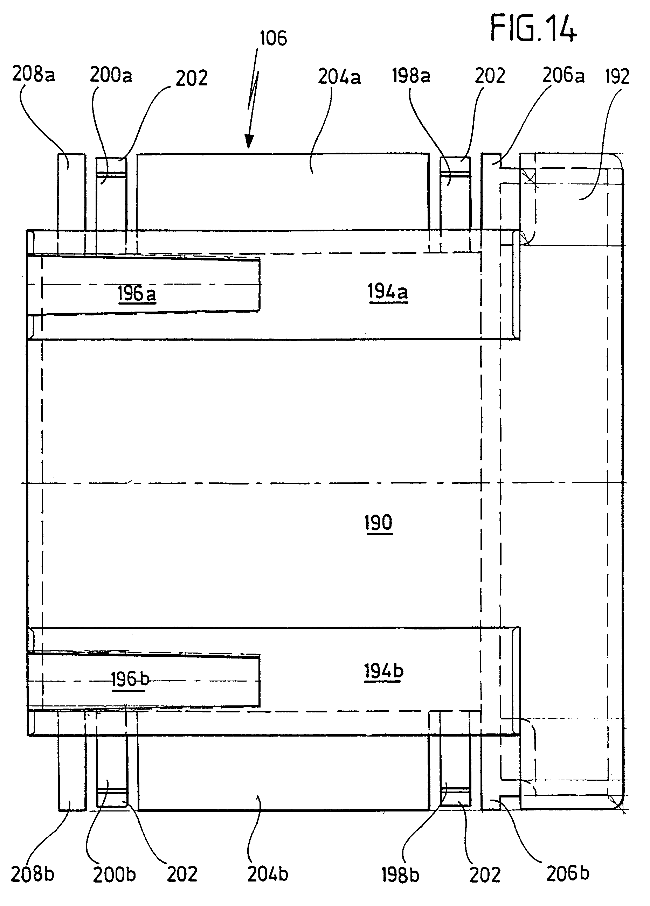

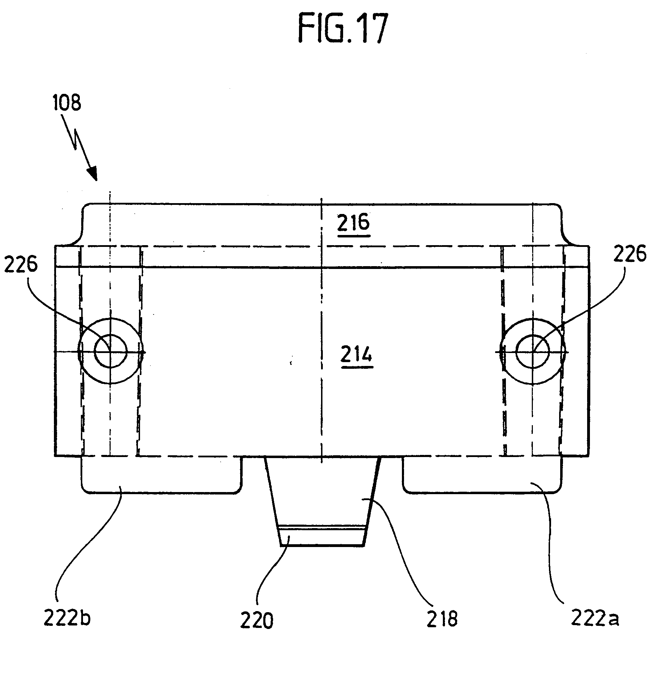

Die nähere Ausgestaltung der vorstehend genannten Bestandteile der Archivbox 100 wird im folgenden anhand der Figuren 4 bis 17 erläutert.

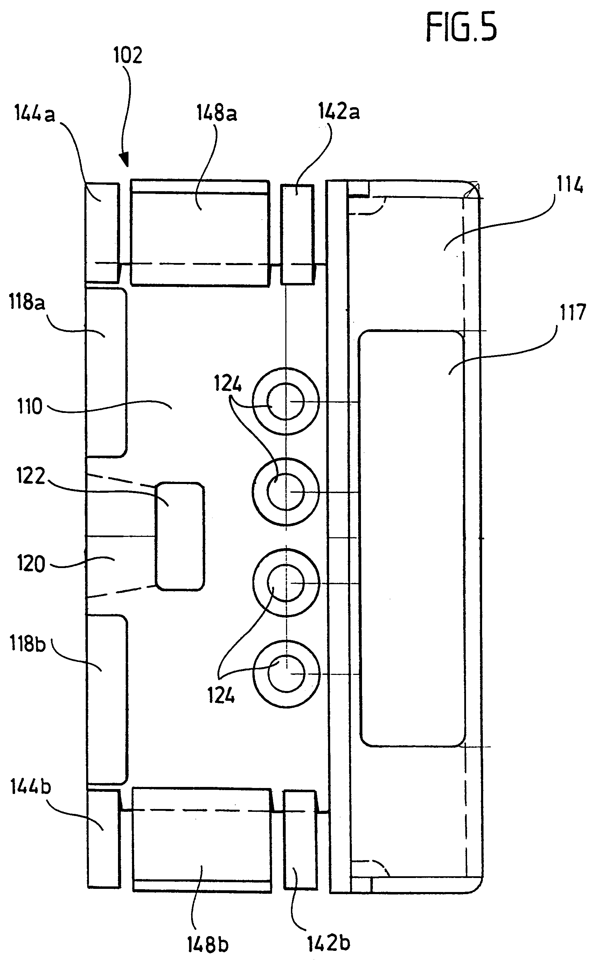

Das in den Figuren 4 und 5 im einzelnen dargestellte, einstückig ausgebildete Basisteil 102 umfaßt eine im zusammengebauten Zustand der Archivbox 100 senkrecht zu den Seitenteilen 104a, 104b ausgerichtete flache Bodenplatte 110, die an ihrem vorderen Ende eine ebenfalls flache, senkrecht zu der Bodenplatte 110 ausgerichtete Stirnplatte 112 trägt. An ihrer der Bodenplatte 110 abgewandten Vorderseite trägt die Stirnplatte 112 einen im wesentlichen pultförmigen Vorsprung 114, der nach unten über die Unterseite der Bodenplatte 110 übersteht und dessen Unterseite eine Boden-Aufstellfläche 116 bildet, mit der die Archivbox 100 auf eine im wesentlichen horizontale Unterlage aufgestellt werden kann.

An seiner geneigten Oberseite ist der Vorsprung 114 mit einer Vertiefung 117 versehen, die beispielsweise einen (nicht dargestellten) Aufkleber aufnehmen kann.

An ihrem der Stirnplatte 112 abgewandten hinteren Ende ist die Bodenplatte 110 an ihrer Oberseite mit einer linken Führungsnut 118a und mit einer rechten Führungsnut 118b versehen, wobei beide Führungsnuten 118a, 118b sich zu der Hinterseite der Bodenplatte 110 hin öffnen und jeweils nahe des linken bzw. nahe des rechten Randes der Bodenplatte 110 angeordnet sind.

Ferner ist die Bodenplatte 110 an ihrer Unterseite mit einer unteren Führungsnut 120 versehen, die sich ebenfalls zu der hinteren Seite der Bodenplatte 110 hin öffnet und an ihrem dieser Öffnung abgewandten Ende in ein die Bodenplatte 110 senkrecht durchsetzendes Rastloch 122 mündet. Diese untere Führungsnut 120 ist an der hinteren Seite der Bodenplatte 110 zwischen der linken Führungsnut 118a und der rechten Führungsnut 118b angeordnet.

Zwischen dem Rastloch 122 und der Stirnplatte 112 ist ein Satz von vier längs der Stirnplatte 112 nebeneinander angeordneter gestufter Durchgangslöcher vorgesehen, deren oberer Bereich einen größeren Durchmesser aufweist als deren unterer Bereich und die als Aufnahmen 124 für einen Satz von vier Verbindungsbolzen 126 dienen.

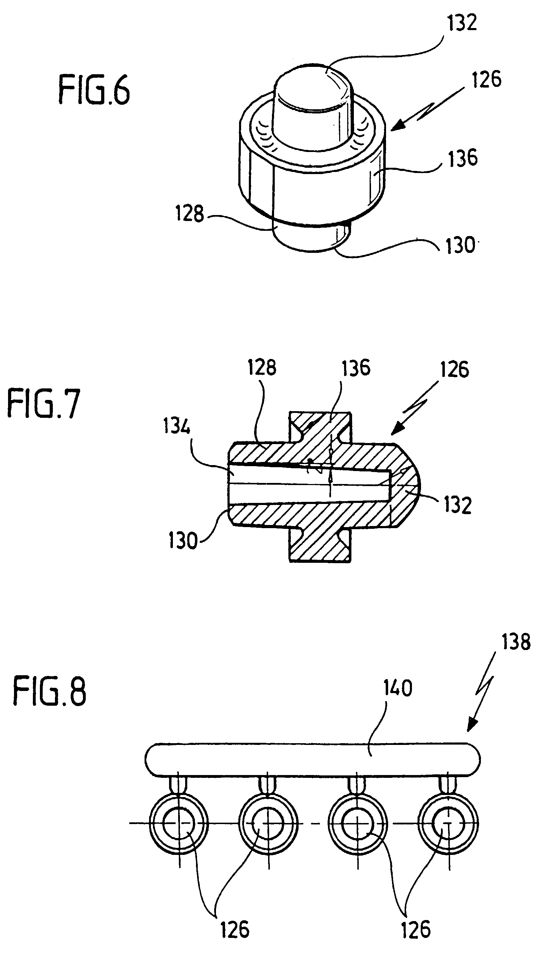

Die Verbindungsbolzen 126 dienen, wie im folgenden noch näher erläutert werden wird, der Verbindung zweier seitlich nebeneinander angeordneter Archivboxen 100. Einer dieser Verbindungsbolzen 126 ist in Fig. 6 in perspektivischer Darstellung und in Fig. 7 in einem Längsschnitt dargestellt.

Jeder Verbindungsbolzen 126 umfaßt einen im wesentlichen zylindrischen Bolzenschaft 128 mit einer im wesentlichen ebenen hinteren Stirnfläche 130 und einer konvex gewölbten Stirnfläche 132. Der Bolzenschaft 128 ist mit einem im wesentlichen kegelstumpfförmigen Sackloch 134 versehen, das auf der hinteren Stirnfläche 130 mündet, koaxial zu dem Bolzenschaft 128 ausgerichtet ist und sich zu der vorderen Stirnfläche 132 des Bolzenschafts 128 hin verjüngt.

Ferner trägt der Bolzenschaft 128 längs seines Umfangs einen ringförmigen Bund 136, dessen axiale Ausdehnung mit zunehmendem Abstand von der Achse des Bolzenschaftes 128 zunimmt, so daß der Bund 136 einen im wesentlichen trapezförmigen Querschnitt aufweist, wie aus Fig. 7 ersichtlich ist.

Die Verbindungsbolzen 126 werden in einem Gießverfahren jeweils zu mehreren, beispielsweise in Sätzen von je vier Stück, hergestellt, wobei die vier Verbindungsbolzen 126 eines Satzes 138 durch einen gemeinsamen Gießrest 140 miteinander verbunden sind.

Die Aufnahmen 124 für die Verbindungsbolzen 126 in der Bodenplatte 110 sind so relativ zueinander angeordnet, daß jeweils ein kompletter Satz 138 von vier Verbindungsbolzen 126 in die Aufnahmen 124 eingelegt werden kann, ohne daß hierzu der Gießrest 140 entfernt werden muß. Beim Einlegen des Satzes 138 von Verbindungsbolzen 126 wird der Gießrest 140 auf der der Stirnplatte 112 abgewandten Seite der Aufnahmen 124 angeordnet.

Die Bodenplatte 110 weist ferner an dem linken Rand ihrer Oberseite eine linke vordere Rastzunge 142a und an dem rechten Rand ihrer Oberseite eine rechte vordere Rastzunge 142b auf, wobei die Rastzungen 142a, 142b nahe der Stirnplatte 112 angeordnet sind und sich im Abstand von derselben von der Bodenplatte 110 weg erstrecken. Ferner weist die Bodenplatte 110 an dem linken Rand ihrer Oberseite eine linke hintere Rastzunge 144a und an dem rechten Rand ihrer Oberseite eine rechte hintere Rastzunge 144b auf, wobei die hinteren Rastzungen 144a, 144b links neben der linken Führungsnut 118a bzw. rechts neben der rechten Führungsnut 118b angeordnet sind und sich parallel zu der vorderen linken Rastzunge 142a bzw. zu der rechten vorderen Rastzunge 142b von der Bodenplatte 110 weg erstrecken.

Jede der Rastzungen 142a, 142b, 144a und 144b trägt an der Unterseite ihres von der Bodenplatte 110 beabstandeten Endes jeweils eine Rastnase 146.

Schließlich trägt die Bodenplatte 110 an ihrem linken Rand eine zwischen der linken vorderen Rastzunge 142a und der linken hinteren Rastzunge 144a angeordnete Führungslasche 148a, die sich parallel zu den Rastnasen 142a und 144a von der Bodenplatte 110 weg erstreckt und an dem der Bodenplatte 110 abgewandten Rand ihrer Oberseite angeschrägt ist. Ebenso trägt die Bodenplatte 110 an ihrem rechten Rand eine entsprechend ausgebildete, zwischen den Rastnasen 142b und 144b angeordnete Führungslasche 148b.

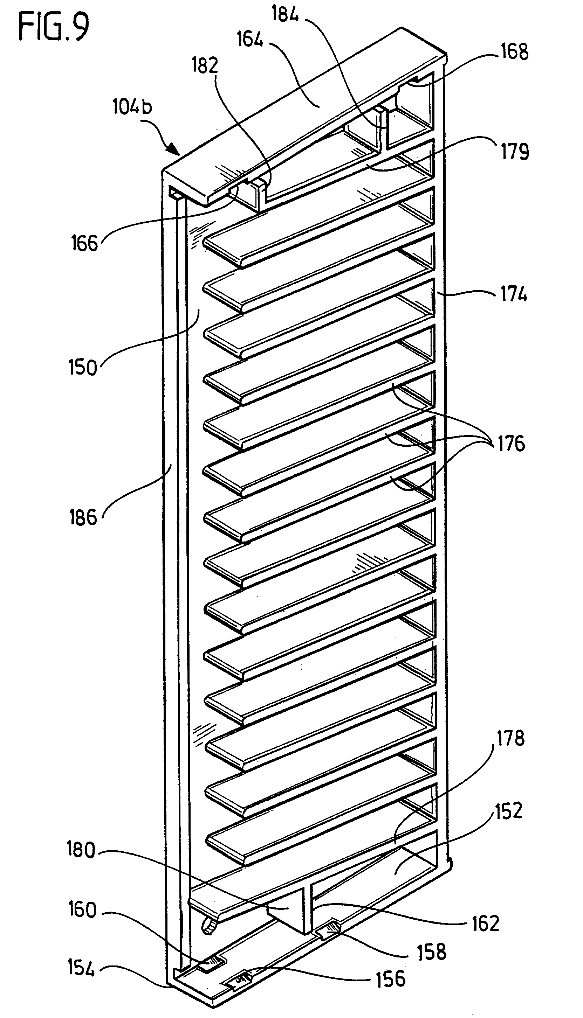

Das in den Figuren 9 bis 11 dargestellte, einstückig ausgebildete rechte Seitenteil 104b der Archivbox 100 umfaßt eine flache, im wesentlichen rechteckige Seitenplatte 150, die an ihrem unteren Ende eine senkrecht zu der Seitenplatte 150 ausgerichtete Grundplatte 152 trägt.

Die Unterseite der Grundplatte 152 dient als Seiten-Aufstellfläche 154 zum Aufstellen der Archivbox auf eine im wesentlichen horizontale (nicht dargestellte) Unterlage.

An dem linken Rand ihrer Oberseite ist die Grundplatte 152 mit einer angeschrägten vorderen Führungsausnehmung 156, die nahe des vorderen Endes der Grundplatte 152 angeordnet ist, und mit einer angeschrägten hinteren Führungsausnehmung 158, die ungefähr in der Mitte des linken Randes der Oberseite der Grundplatte 152 angeordnet ist, versehen. An dem rechten, der Seitenplatte 150 zugewandten Rand ihrer Oberseite ist die Grundplatte 152 mit einer angeschrägten vorderen Rastausnehmung 160, die denselben Abstand von dem vorderen Ende der Grundplatte 152 aufweist wie die vordere Führungsausnehmung 156, und mit einer hinteren Rastausnehmung 162 versehen, die von dem vorderen Ende der Grundplatte 152 denselben Abstand aufweist wie die hintere Führungsausnehmung 158.

An ihrem oberen Ende trägt die Seitenplatte 150 eine senkrecht zu der Seitenplatte 150 ausgerichtete, zur Innenseite des rechten Seitenteils 104b hin abstehende flache Abdeckplatte 164. Die Abdeckplatte 164 ist am linken Rand ihrer Unterseite mit einer abgeschrägten vorderen Führungsausnehmung 166, die nahe des vorderen Endes der Abdeckplatte 164 angeordnet ist, und mit einer angeschrägten hinteren Führungsausnehmung 168 versehen, die nahe des hinteren Endes der Abdeckplatte 164 angeordnet ist. Ferner ist die Abdeckplatte 164 an dem rechten, der Seitenplatte 150 zugewandten Rand ihrer Unterseite mit einer angeschrägten vorderen Rastausnehmung 170, die von dem vorderen Ende der Abdeckplatte 164 denselben Abstand aufweist wie die vordere Führungsausnehmung 166, und mit einer angeschrägten hinteren Rastausnehmung versehen, die von dem hinteren Ende der Abdeckplatte 164 denselben Abstand aufweist wie die hintere Führungsausnehmung 168.

Ferner trägt die Seitenplatte 150 an ihrem hinteren Ende eine plattenförmige, flache Anschlagleiste 174, die senkrecht zu der Seitenplatte 150 und zu der Grundplatte 152 sowie der Abdeckplatte 164 ausgerichtet ist und sich von der Oberseite der Grundplatte 152 bis zu der Unterseite der Abdeckplatte 164 erstreckt.

Ferner trägt die Seitenplatte 150 auf ihrer Innenseite eine Mehrzahl von plattenförmigen flachen Aufnahmerippen 176, die senkrecht zu der Seitenplatte 150 und parallel zueinander ausgerichtet sind und sich von der Vorderseite der Anschlagleiste 174 aus zu dem vorderen Ende der Seitenplatte 150 hin erstrecken, wobei die Aufnahmerippen 176 zu der Vorderseite des rechten Seitenteils 104b hin unter einem Neigungswinkel von ungefähr 10° gegen die Oberseite der Grundplatte 152 ansteigen.

Die Aufnahmerippen 176 dienen der Aufnahme der zu archivierenden Datenträger oder der zu archivierenden Kassetten für Datenträger; der Abstand zwischen jeweils zwei einander benachbarten Aufnahmerippen 176 ist daher geringfügig größer gewählt als die Dicke der zu archivierenden Datenträger oder der zu archivierenden Kassetten für Datenträger, damit diese Datenträger oder Kassetten mit geringem Spiel zwischen jeweils zwei benachbarten Aufnahmerippen 176 eingeschoben werden können.

Die Neigung der Aufnahmerippen 176 gegen die Grundplatte 152 erfüllt den Zweck, ein Herausfallen eingeschobener Datenträger oder Kassetten aus den Zwischenräumen zwischen den Aufnahmerippen 176 an der Vorderseite der Archivbox 100 zu verhindern. Ein Hinausfallen der Datenträger oder Kassetten an der Rückseite der Archivbox 100 wird durch die Anschlagleiste 174 verhindert.

Die unterste Aufnahmerippe 178 steht zu der Vorderseite des rechten Seitenteils 104b hin über die übrigen Aufnahmerippen 176 über, während sich die oberste Aufnahmerippe 179 weniger weit zu der Vorderseite des rechten Seitenteils 104b erstreckt als die übrigen Aufnahmerippen 176.

Ferner trägt die Seitenplatte 150 auf ihrer Innenseite eine plattenförmige, flache untere Führungsrippe 180, die senkrecht zu der Seitenplatte 150 ausgerichtet ist und sich parallel zu der Anschlagleiste 174 von der Unterseite der untersten Aufnahmerippe 178 zu der Oberseite der Grundplatte 152 hin erstreckt und im Abstand von der Oberseite der Grundplatte 152 endet.

Die untere Führungsrippe 180 weist einen Abstand von dem vorderen Ende des rechten Seitenteils 104b auf, der zwischen den Abständen der vorderen Rastausnehmung 160 und der hinteren Rastausnehmung 162 der Grundplatte 152 von der Vorderseite des rechten Seitenteils 104b liegt.

Ferner trägt die Seitenplatte 150 auf ihrer Innenseite eine plattenförmige, flache obere vordere Führungsrippe 182, die senkrecht zu der Seitenplatte 150 ausgerichtet ist, sich von der Oberseite der obersten Aufnahmerippe 179 parallel zu der Anschlagleiste 174 zu der Unterseite der Abdeckplatte 164 hin erstreckt und im Abstand von der Unterseite der Abdeckplatte 164 endet. Der Abstand der oberen vorderen Führungsrippe 182 von der Vorderseite des rechten Seitenteils 104b ist etwas größer als der Abstand der vorderen Rastausnehmung 170 der Abdeckplatte 164 von der Vorderseite des rechten Seitenteils 104b.

Ferner trägt die Seitenplatte 150 auf ihrer Innenseite eine plattenförmige, flache obere hintere Führungsrippe 184, die senkrecht zu der Seitenplatte 150 ausgerichtet ist, sich zwischen der oberen vorderen Führungsrippe 182 und der Anschlagleiste 174 parallel zu denselben von der Oberseite der obersten Aufnahmerippe 179 zu der Unterseite der Abdeckplatte 164 hin erstreckt und im Abstand von der Unterseite der Abdeckplatte 164 endet. Der Abstand der oberen hinteren Führungsrippe 184 von der Hinterseite des rechten Seitenteils 104b ist etwas größer als der Abstand der hinteren Rastausnehmung 172 der Abdeckplatte 164 von der Hinterseite des rechten Seitenteils 104b.

Ferner trägt die Seitenplatte 150 an dem vorderen Rand ihrer Innenseite eine Vorderleiste 186, die senkrecht zu der Seitenplatte 150 ausgerichtet ist und sich parallel zu der Anschlagleiste 174 zwischen der Grundplatte 152 und der Abdeckplatte 164 erstreckt, wobei die Vorderleiste 186 jeweils im Abstand von der Oberseite der Grundplatte 152 bzw. von der Unterseite der Abdeckplatte 164 endet. Die Ausdehnung der Vorderleiste 186 senkrecht zu der Seitenplatte 150 ist dabei geringer als die Ausdehnung der Aufnahmerippen 176 senkrecht zu der Seitenplatte 150, um ein Einschieben der Datenträger oder Kassetten zwischen die Aufnahmerippen 176 an der Vorderleiste 186 vorbei zu ermöglichen.

Die unterste Aufnahmerippe 178 erstreckt sich von der Vorderseite der Anschlagleiste 174 bis zu der Hinterseite der Vorderleiste 186.

Ferner wird die Seitenplatte 150 in ihren Eckbereichen von vier gestuften Durchgangslöchern durchsetzt, deren Durchmesser an der Außenseite der Seitenplatte 150 größer ist als an deren Innenseite (siehe Fig. 1) und die als Einstecklöcher 188 für die Verbindungsbolzen 126 dienen.

Das linke Seitenteil 104a ist spiegelsymmetrisch zu dem vorstehend beschriebenen rechten Seitenteil 104b aufgebaut.

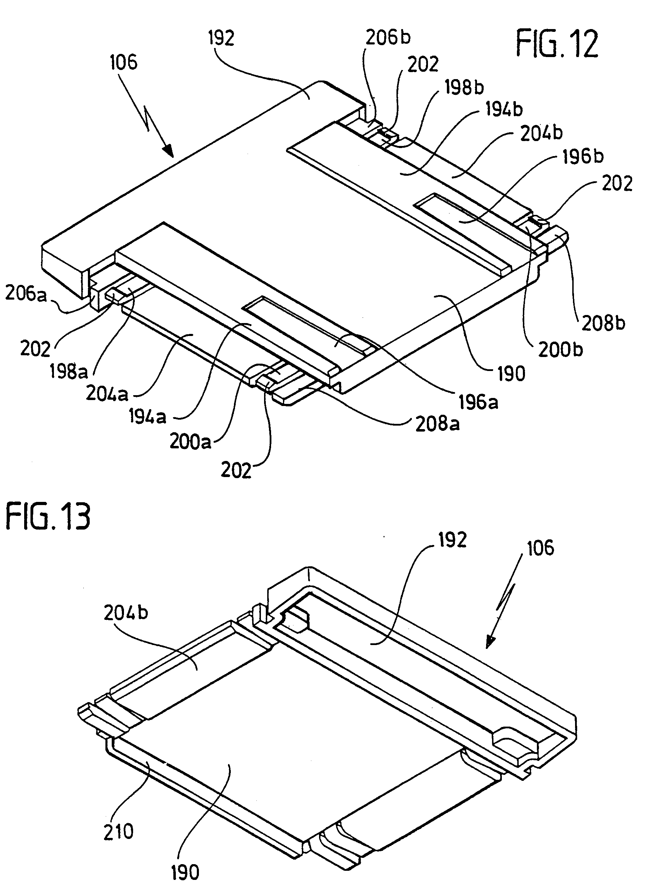

Das in den Figuren 12 bis 14 dargestellte, einstückig ausgebildete Deckteil 106 der Archivbox 100 umfaßt eine im wesentlichen rechteckige, flache Deckplatte 190, die an ihrem vorderen Ende einen im wesentlichen pultförmigen Vorsprung 192 trägt, dessen Oberseite mit der Oberseite der Deckplatte 190 bündig ist.

Die Deckplatte 190 trägt ferner längs des linken Randes ihrer Oberseite eine linke Erhebung 194a, deren Oberseite um im wesentlichen dieselbe Strecke gegenüber der Oberseite der Deckplatte 190 versetzt ist, um die die Boden-Aufstellfläche 116 des Bodenteils 102 gegenüber der Unterseite der Bodenplatte 110 versetzt ist. Dadurch ist es möglich, zum Stapeln zweier Archivboxen 100 eine obere Archivbox 100 mit ihrem Bodenteil 102 so auf das Deckteil 106 der unteren Archivbox 100 aufzustellen, daß die Boden-Aufstellfläche 116 des Vorsprungs 114 des Bodenteils 102 der oberen Archivbox 100 auf der Oberseite des Vorsprungs 192 des Deckteils 106 der unteren Archivbox aufliegt und die Unterseite der Bodenplatte 110 des Bodenteils 102 der oberen Archivbox 100 auf den Oberseiten der linken Erhebung 194a und der zu derselben spiegelsymmetrisch am rechten Rand der Oberseite der Deckplatte 190 angeordneten rechten Erhebung 194b des Deckteils 106 der unteren Archivbox 100 aufliegt.

Die linke Erhebung 194a ist mit einer linken Führungsnut 196a versehen, die sich zur hinteren Seite der Deckplatte 190 hin öffnet und sich im wesentlichen parallel zu dem linken Rand der Deckplatte 190 zur Vorderseite des Deckteils 106 hin erstreckt, wobei sich die linke Führungsnut 196a zu ihrem vorderen Ende hin verjüngt. Der Querschnitt der linken Führungsnut 196a ist im wesentlichen trapezförmig, wobei die Breite der linken Führungsnut 196a an deren Unterseite größer ist als an deren Oberseite.

Ferner trägt die Deckplatte 190 am linken Rand ihrer Unterseite eine linke vordere Rastzunge 198a, die nahe des vorderen, dem Vorsprung 192 des Deckteils 106 zugewandten vorderen Endes der Deckplatte 190 angeordnet ist, und eine linke hintere Rastzunge 200a, die nahe des hinteren, dem Vorsprung 192 des Deckteils 106 abgewandten Endes der Deckplatte 190 angeordnet ist. Beide Rastzungen 198a, 200a tragen an der Oberseite ihrer äußeren, der Deckplatte 190 abgewandten Enden jeweils eine Rastnase 202.

Ferner trägt die Deckplatte 190 am linken Rand ihrer Unterseite eine linke Führungslasche 204a, die parallel zu der Deckplatte 190 ausgerichtet und zwischen der linken vorderen Rastzunge 198a und der linken hinteren Rastzunge 200a angeordnet ist. Der äußere, der Deckplatte 190 abgewandte Rand der Führungslasche 204a ist angeschrägt.

Ferner trägt die Deckplatte 190 an dem linken Rand ihrer Unterseite einen linken vorderen Führungsstift 206a, der zwischen dem Vorsprung 192 des Deckteils 106 und der linken vorderen Rastzunge 198a angeordnet ist und sich parallel zu der linken vorderen Rastzunge 198a von der Deckplatte 190 weg erstreckt, und einen linken hinteren Führungsstift 208a, der zwischen dem hinteren Ende der Deckplatte 190 und der linken hinteren Rastzunge 200b angeordnet ist und sich parallel zu der linken hinteren Rastzunge 200b von der Deckplatte 190 weg erstreckt.

Die rechte Seite der Deckplatte 190 ist spiegelsymmetrisch zu der linken Seite der Deckplatte 190 aufgebaut und weist demnach eine rechte Erhebung 194b mit einer rechten Führungsnut 196b sowie eine rechte vordere Rastzunge 198b, eine rechte hintere Rastzunge 200b, eine rechte Führungslasche 204b, einen rechten vorderen Führungsstift 206b und einen rechten hinteren Führungsstift 208b auf.

Schließlich trägt die Deckplatte 190 an dem hinteren Rand ihrer Unterseite eine senkrecht zu der Deckplatte 190 ausgerichtete, nach unten abstehende Einhängeleiste 210.

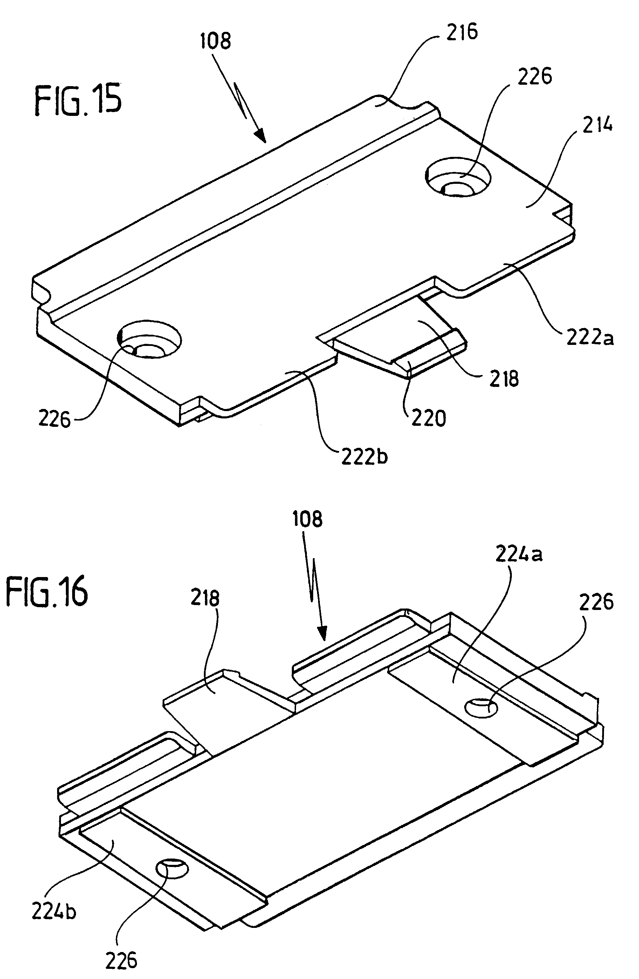

Das in den Figuren 15 bis 17 dargestellte, einstückig ausgebildete Halteteil 108 der Archivbox 100 umfaßt eine rechteckige flache Halteplatte 214, die an ihrem hinteren Ende eine Stützleiste 216 trägt. Die Unterseite der Stützleiste 216 ist gegenüber der Unterseite der Halteplatte 214 nach oben versetzt.

Ferner trägt die Halteplatte 214 in der Mitte ihrer vorderen, der Stützleiste 216 abgewandten Seite eine Rastzunge 218, die im wesentlichen parallel zu der Halteplatte 214 ausgerichtet ist und sich zu ihrem von der Halteplatte 214 abgewandten Ende, das an seiner Oberseite mit einer Rastnase 220 versehen ist, hin verjüngt.

Ferner trägt die Halteplatte 214 an ihrem hinteren Ende eine zwischen der Rastzunge 218 und dem linken Rand der Halteplatte 214 angeordnete linke Führungslasche 222a und eine zwischen der Rastzunge 218 und dem rechten Rand der Halteplatte 214 angeordnete rechte Führungslasche 222b, wobei die Führungslaschen 222a, 222b parallel zu der Halteplatte 214 ausgerichtet sind und sich im wesentlichen parallel zu der Rastzunge 218 von der Halteplatte 214 weg erstrecken. Die Oberseiten der Führungslaschen 222a, 222b sind bündig mit der Oberseite der Halteplatte 214.

Ferner trägt die Halteplatte 214 an ihrer Unterseite einen nahe des linken Randes der Halteplatte 214 angeordneten linken Einschiebefuß 224a und einen nahe des rechten Randes der Halteplatte 214 angeordneten rechten Einschiebefuß 224b, wobei die Einschiebefüße 224a, 224b jeweils die Form einer Erhebung aufweisen, die sich von der hinteren, der Stützleiste 216 zugewandten Seite der Halteplatte 214 zu der vorderen, der Rastzunge 218 zugewandten Seite der Halteplatte 214 erstreckt und sich in dieser Richtung leicht verjüngt.

Die Einschiebefüße 224a, 224b weisen jeweils einen im wesentlichen trapezförmigen Querschnitt auf, wobei die Breite des jeweiligen Einschiehefußes 224a, 224b mit wachsendem Abstand von der Unterseite der Halteplatte 214 zunimmt, so daß die Seitenflächen der Einschiebefüße 224a, 224b um einen Winkel von ungefähr 15° gegenüber der Flächennormalen der Unterseite der Halteplatte 214 geneigt sind. Diese Neigung entspricht der Neigung der Seitenwände der Führungsnuten 196a, 196b des Deckteils 106, so daß die Einschiebefüße 224a, 224b des Halteteils 212 in die Führungsnuten 196a, 196b des Deckteils 106 eingeschoben werden können. Die Unterseiten der Einschiebefüße 224a, 224b sind um dieselbe Strecke gegenüber der Unterseite der Halteplatte 214 versetzt, um die die Oberseiten der Erhebungen 194a, 194b des Deckteils 106 gegenüber der Oberseite der Deckplatte 190 versetzt sind, so daß, wenn das Halteteil 108 in das Deckteil 106 eingeschoben ist, die Unterseite der Halteplatte 214 des Halteteils 108 auf den Oberseiten der Erhebungen 194a, 194b des Deckteils 106 aufliegt.

Die Einschiebefüße 224a, 224b und die Halteplatte 214 werden von zwei gestuften Durchgangslöchern durchsetzt, deren Durchmesser an der den Einschiebefüßen 224a, 224b abgewandten Oberseite der Halteplatte 214 größer ist als an den Unterseiten der Einschiebefüße 224a, 224b und die als Befestigungslöcher 226 zur Aufnahme von Befestigungsmitteln, beispielsweise Schrauben, dienen, durch welche das Halteteil 108 an einer (nicht dargestellten) Haltefläche festlegbar ist.

Das Bodenteil 102, die Seitenteile 104a und 104b sowie das Deckteil 106 bilden zusammen einen Archivierungsteil 228 der Archivbox 100, der zur Aufnahme der zu archivierenden Datenträger oder Kassetten für Datenträger dient.

Aus den vorstehend genannten Elementen wird der Archivierungsteil 228 wie folgt zusammengesetzt:

Das Bodenteil 102 wird, mit seiner rechten Seite voran, so senkrecht zu der Seitenplatte 150 des rechten Seitenteils 104b in das letztere eingeführt, daß die rechte vordere Rastzunge 142b des Bodenteils 102 der vorderen Führungsausnehmung 156 des rechten Seitenteils 104b und die rechte hintere Rastzunge 144b des Bodenteils 102 der hinteren Führungsausnehmung 158 des rechten Seitenteils 104b gegenüberstehen, bis die Rastnasen 146 der Rastzungen 142b und 144b in die jeweils zugeordnete Rastausnehmung 160 bzw. 162 des rechten Seitenteils 104b einrasten. Bei diesem Einrastvorgang wird die rechte Führungslasche 148b des Bodenteils 102 zwischen der Oberseite der Grundplatte 152 und dem unteren Ende der unteren Führungsrippe 180 des rechten Seitenteils 104b geführt. Nach dem Einrasten des Bodenteils 102 in dem rechten Seitenteil 104b verhindert die untere Führungsrippe 180, daß das Bodenteil 102 diese Raststellung nach oben verläßt.

Die Verbindung zwischen dem rechten Seitenteil 104b und dem Deckteil 106 wird dadurch hergestellt, daß das Deckteil 106, mit seiner rechten Seite voran, im wesentlichen senkrecht zu der Seitenplatte 150 des rechten Seitenteils 104b in dasselbe eingeführt wird, wobei die rechte vordere Rastzunge 198b des Deckteils 106 der vorderen Führungsausnehmung 166 der Abdeckplatte 164 und die rechte hintere Rastzunge 200b des Deckteils 106 der hinteren Führungsausnehmung 168 der Abdeckplatte 164 gegenüberstehen, bis die Rastnasen 202 der Rastzungen 198b und 200b in die jeweils zugehörige vordere Rastausnehmung 170 bzw. hintere Rastausnehmung der Abdeckplatte 164 einrasten. Bei dieser Einrastbewegung wird die rechte Führungslasche 204b des Deckteils 106 zwischen der Unterseite der Abdeckplatte 164 und den oberen Enden der oberen vorderen Führungsrippe 182 und der oberen hinteren Führungsrippe 184 geführt. In der Raststellung des Deckteils 106 an dem rechten Seitenteil 104b verhindern die obere vordere Führungsrippe 182 und die obere hintere Führungsrippe 184, daß sich das Deckteil 106 nach unten aus der Raststellung hinaus bewegt. Die Führungsstifte 206b und 208b des Deckteils 106 sorgen während des Einrastvorgangs für eine zusätzliche Führung des Deckteils 106 an der Unterseite der Abdeckplatte 164 des rechten Seitenteils 104b.

Zur Verbindung mit dem linken Seitenteil 104a werden die jeweils linken Seiten des Bodenteils 102 und des Deckteils 106 in derselben Weise mit dem linken Seitenteil 104a verrastet, wie dies vorstehend für die Verrastung der rechten Seiten des Bodenteils 102 und des Deckteils 106 mit dem rechten Seitenteil 104b beschrieben wurde.

Im zusammengebauten Zustand des Archivierungsteils 228 beranden die Unterseiten der Seitenteile 104a, 104b eine sich zwischen den Seiten-Aufstellflächen 154 erstreckende Teil-Standfläche des Archivierungsteils 228. Die Boden-Aufstellfläche 116 des Bodenteils 102 ist außerhalb dieser Teil-Standfläche angeordnet, was die gesamte zur Verfügung stehende Standfläche des Archivierungsteils vergrößert und die Standsicherheit des Archivierungsteils 228 erhöht.

Zur Fixierung der Archivbox 100 an einer im wesentlichen vertikalen Haltefläche mittels des Halteteils 108 wird wie folgt verfahren:

Das Halteteil 108 wird so an der Haltefläche angeordnet, daß die Unterseiten der Einschiebefüße 224a, 224b an der Haltefläche anliegen und die Stützleiste 216 des Halteteils 108 nach oben weist, und mittels durch die Befestigungslöcher 226 geführter Befestigungselemente, beispielsweise Schrauben, an der Haltefläche festgelegt.

Dann wird der Archivierungsteil 228 von oben in der Weise in das Halteteil 108 eingehängt, daß die Hängeleiste 210 des Deckteils 106 die Stützleiste 216 des Halteteils 108 hintergreift und die Unterseite der Deckplatte 190 des Deckteils 106 auf der Oberseite der Stützleiste 216 des Halteteils 108 aufliegt.

Um das Archivierungsteil 228 wieder von dem Halteteil 108 abzunehmen, wird es relativ zu dem Halteteil 108 nach oben bewegt, bis die Einhängeleiste 210 des Deckteils 106 die Stützleiste 216 des Halteteils 108 nicht mehr hintergreift, worauf der Archivierungsteil 228 von der Haltefläche weg bewegt werden kann.

In der vorstehend beschriebenen Aufhängestellung der Archivbox 100 ist demnach der Archivierungsteil 228 lösbar an dem Halteteil 108 gehalten.

Zum Fixieren der Archivbox 100 mittels des Halteteils 108 auf einer im wesentlichen horizontalen Haltefläche wird wie folgt verfahren:

Das Halteteil 108 wird auf der horizontalen Haltefläche so angeordnet, daß die Unterseiten der Einschiebefüße 224a, 224b auf der Haltefläche aufliegen, und mittels durch die Befestigungslöcher 226 geführter Befestigungselemente, beispielsweise Schrauben, an der Haltefläche festgelegt.

Dann wird der Archivierungsteil 228 in horizontaler Richtung, mit seiner hinteren Seite voran, in der Weise auf das Halteteil 108 aufgeschoben, daß die Rastzunge 218 des Halteteils 108 in der unteren Führungsnut 120 des Bodenteils 102 und die Führungslaschen 222a, 222b des Halteteils 108 in den Führungsnuten 118a, 118b des Bodenteils 102 geführt sind, bis die Rastnase 220 der Rastzunge 218 des Halteteils 108 in das Rastloch 122 des Bodenteils 102 einrastet. Bei dieser Einrastbewegung sind die Innenseiten der Grundplatten 152 der Seitenteile 104a, 104b am linken bzw. rechten Rand der Halteplatte 214 des Halteteils 108 geführt.

Dadurch, daß die Führungslaschen 222a, 222b in der Raststellung in die Führungsnuten 118a, 118b des Bodenteils 102 eingreifen, ist gewährleistet, daß der Archivierungsteil nicht nach oben aus der Raststellung hinausbewegbar ist.

Zur Entnahme des Archivierungsteils 228 aus der Raststellung kann dasselbe, unter elastischer Verformung der Rastzunge 218 des Halteteils 108 in horizontaler Richtung von dem Halteteil 108 abgezogen werden.

Der Archivierungsteil 228 ist demnach in der vorstehend beschriebenen Aufschiebestellung lösbar an dem Halteteil 108 gehalten.

Diese Aufschiebestellung kann auch als Aufbewahrungsstellung des Halteteils dienen, während das Halteteil nicht an einer Haltefläche festgelegt ist, um einen Verlust des Halteteils zu verhindern.

Zum Stapeln einer oberen Archivbox 100 auf einer unteren Archivbox 100 mittels des Halteteils 108 wird wie folgt verfahren:

Das Halteteil 108 der oberen Archivbox 100 wird in der Weise in das Deckteil 106 der unteren Archivbox 100 eingeschoben, daß die Einschiebefüße 224a, 224b des Halteteils 108 in den Führungsnuten 196a, 196b des Deckteils 106 geführt sind, bis die vorderen Enden der Einschiebefüße 224a, 224b an den Endflächen der Führungsnuten 196a, 196b anstoßen. Diese in das Deckteil 106 eingeschobene Stellung des Halteteils 108 wird als Stapelstellung bezeichnet. In dieser Stapelstellung ist das Halteteil 108 mit dem Deckteil 106 lösbar verbunden.

Der Archivierungsteil 228 der oberen Archivbox 100 wird nun auf dieselbe Weise auf das in der Stapelstellung befindliche Halteteil 108 der oberen Archivbox 100 aufgeschoben, die bereits im Zusammenhang mit der Fixierung der Archivbox 100 an einer im wesentlichen horizontalen Haltefläche beschrieben wurde.

Befindet sich das Halteteil 108 in der Stapelstellung und der Archivierungsteil 228 in der Aufschiebestellung, so liegt die obere Archivbox 100 mit der Boden-Aufstellfläche 116 des Bodenteils 102 und mit den Seiten-Aufstellflächen 154 der Seitenteile 104a, 104b auf der Oberseite des Vorsprungs 192 des Deckteils 106 bzw. auf den Oberseiten der Abdeckplatten 164 der Seitenteile 104a, 104b der unteren Archivbox 100 auf.

Die obere Archivbox 100 kann auf zweierlei Weise wieder von der unteren Archivbox 100 gelöst werden:

Zum einen kann der Archivierungsteil 228 der oberen Archivbox 100 in derselben Weise von dem in Stapelstellung befindlichen Halteteil 108 abgezogen werden, die bereits im Zusammenhang mit der Fixierung der Archivbox 100 auf einer im wesentlichen horizontalen Haltefläche beschrieben wurde.

Andererseits ist es jedoch auch möglich, die komplette obere Archivbox 100, also Archivierungsteil 228 und Halteteil 108 gemeinsam, von dem Deckteil 106 der unteren Archivbox 100 zu lösen, indem die gesamte obere Archivbox 100 so relativ zu dem Deckteil 106 der unteren Archivbox 100 verschoben wird, daß die Einschiebefüße 224a, 224b des Halteteils 108 nicht mehr in die Führungsnuten 196a, 196b des Deckteils 106 eingreifen.

Es ist auch möglich, in der vorstehend beschriebenen Weise mehr als zwei Archivboxen 100 übereinanderzustapeln.

Zur Verbindung zweier nebeneinander angeordneter Archivboxen 100 mittels der Verbindungsbolzen 126 wird wie folgt verfahren:

Ein Satz 138 von vier Verbindungsbolzen 126 wird den Aufnahmen 124 im Bodenteil 102 einer der Archivboxen 100 entnommen, und die Verbindungsbolzen 126 werden von dem sie miteinander verbindenden Gießrest 140 gelöst. Diese Verbindungsbolzen 126 werden in die vier Einstecklöcher 188 des rechten Seitenteils 104b der linken der beiden zu verbindenden Archivboxen 100 von außen eingedrückt, so daß die Verbindungsbolzen 126 in den Einstecklöchern 188 gehalten sind.

Darauf wird die rechte der miteinander zu verbindenden Archivboxen 100 in horizontaler Richtung, mit ihrem linken Seitenteil 104a voran, senkrecht zu den Achsen der Bolzenschäfte 128 der Verbindungsbolzen 126 so auf das rechte Seitenteil 104b der linken der miteinander zu verbindenden Archivboxen 100 zubewegt, daß die Verbindungsbolzen 126, die an ihrem einen Ende in den Einstecklöchern 188 des rechten Seitenteils 104b der linken Archivbox 100 gehalten sind, mit ihrem jeweils anderen Ende in die Einstecklöcher 188 des linken Seitenteils 104a der rechten der miteinander zu verbindenden Archivboxen 100 eingedrückt werden.

Damit sind die nebeneinander angeordneten Archivboxen 100 miteinander verbunden. Diese Verbindung kann wieder gelöst werden, indem eine der Archivboxen 100 in horizontaler Richtung, senkrecht zu den Seitenteilen 104a, 104b, so von der jeweils anderen Archivbox 100 wegbewegt wird, daß jeder der Verbindungsbolzen 126 jeweils eines der beiden Einstecklöcher 188, in denen er gehalten ist, verläßt.

Auf die vorstehend beschriebene Weise können auch mehr als zwei nebeneinander angeordnete Archivboxen 100 miteinander verbunden werden.

## Patentansprüche

1. Archivbox zur Archivierung von Datenträgern, insbesondere von Ton- oder Bilddatenträgern, oder von Kassetten für solche Datenträger, umfassend einen Archivierungsteil (228) zur Aufnahme der Datenträger bzw. Kassetten,
**dadurch gekennzeichnet,** daß die Archivbox (100) ein Halteteil (108) umfaßt, das mittels mindestens eines Befestigungselementes an einer Haltefläche festlegbar ist, und daß der Archivierungsteil (228) und das Halteteil (108) in mindestens eine Haltestellung bringbar sind, in der das Archivierungsteil (228) lösbar an dem Halteteil (108) gehalten ist.

2. Archivbox nach Anspruch 1, dadurch gekennzeichnet, daß der Archivierungsteil (228) und das Halteteil (108) in mindestens zwei voneinander verschiedene Haltestellungen bringbar sind.

3. Archivbox nach einem der Ansprüche 1 oder 2, dadurch gekennzeichnet, daß das Halteteil (108) in der Haltestellung oder in einer der Haltestellungen an einer im wesentlichen horizontalen Haltefläche festlegbar ist.

4. Archivbox nach einem der Ansprüche 1 bis 3, dadurch gekennzeichnet, daß das Halteteil (108) in der Haltestellung oder in einer der Haltestellungen an einer im wesentlichen vertikalen Haltefläche festlegbar ist.

5. Archivbox nach einem der Ansprüche 1 bis 4, dadurch gekennzeichnet, daß das Halteteil (108) der Archivbox (100) in eine Stapelstellung bringbar ist, in der das Halteteil (108) der Archivbox (100) an einer weiteren Archivbox (100) lösbar gehalten ist.

6. Archivbox nach Anspruch 5, dadurch gekennzeichnet, daß das Halteteil (108) mindestens einen Einschiebefuß (224a, 224b) aufweist, der in eine in der weiteren Archivbox (100) angeordnete Führungsnut (196a, 196b) einführbar ist.

7. Archivbox nach Anspruch 6, dadurch gekennzeichnet, daß die Führungsnut (196a, 196b) sich längs der Einführrichtung des Einschiebefußes (224a, 224b) verjüngt.

8. Archivbox nach einem der Ansprüche 6 oder 7, dadurch gekennzeichnet, daß der Einschiebefuß (224a, 224b) sich längs der Einführrichtung verjüngt.

9. Archivbox nach einem der Ansprüche 1 bis 8, dadurch gekennzeichnet, daß der Archivierungsteil (228) in der Haltestellung oder in einer der Haltestellungen an dem Halteteil eingehängt ist.

10. Archivbox nach einem der Ansprüche 1 bis 9, dadurch gekennzeichnet, daß der Archivierungsteil (228) in der Haltestellung oder in einer der Haltestellungen mit dem Halteteil (108) verrastet ist.

11. Archivbox nach Anspruch 10, dadurch gekennzeichnet, daß der Archivierungsteil (228) längs einer Einrastrichtung in die Haltestellung oder in eine der Haltestellungen bringbar ist und daß der Archivierungsteil (228) und das Halteteil (108) jeweils mindestens ein Führungselement (118a, 118b, 120, 218, 222a, 222b) aufweisen, wobei die Führungselemente (118a, 118b, 120, 218, 222a, 222b) des Archivierungsteils (228) und des Halteteils (108) so zusammenwirken, daß der Archivierungsteil (228) nicht quer zu der Einrastrichtung aus der Haltestellung bringbar ist.

12. Archivbox nach einem der Ansprüche 1 bis 11, dadurch gekennzeichnet, daß das Halteteil (108) mindestens ein, vorzugsweise gestuftes, Durchgangsloch (226) zur Aufnahme eines Befestigungselements aufweist.

13. Archivbox nach einem der Ansprüche 1 bis 12, dadurch gekennzeichnet, daß der Archivierungsteil (228) ein Bodenteil (102) mit einer Aufstellfläche (116) zum Aufstellen der Archivbox (100) auf eine im wesentlichen horizontale Stellfläche umfaßt.

14. Archivbox nach Anspruch 13, dadurch gekennzeichnet, daß das Bodenteil (102) in der Haltestellung oder in einer der Haltestellungen an dem Halteteil (108) gehalten ist.

15. Archivbox nach einem der Ansprüche 13 oder 14, dadurch gekennzeichnet, daß der Archivierungsteil (228) der Archivbox (100) mindestens ein Seitenteil (104a, 104b) umfaßt, das mit dem Bodenteil (102) verrastbar ist.

16. Archivbox nach Anspruch 15, dadurch gekennzeichnet, daß der Archivierungsteil (228) mindestens zwei Seitenteile (104a, 104b) umfaßt, deren untere Enden eine Teil-Standfläche des Archivierungsteils (228) beranden, und daß die Aufstellfläche (116) des Bodenteils (102) zumindest teilweise außerhalb dieser Teil-Standfläche angeordnet ist.

17. Archivbox nach einem der Ansprüche 13 bis 16, dadurch gekennzeichnet, daß das Bodenteil (102) einstückig ausgebildet ist.

18. Archivbox nach einem der Ansprüche 1 bis 17, dadurch gekennzeichnet, daß der Archivierungsteil (228) der Archivbox (100) ein an einem oberen Ende der Archivbox (100) angeordnetes Deckteil (106) und mindestens ein Seitenteil (104a, 104b) umfaßt, daß mit dem Deckteil (106) verrastbar ist.

19. Archivbox nach Anspruch 18, dadurch gekennzeichnet, daß das Deckteil (106) einstückig ausgebildet ist.

20. Archivbox nach einem der Ansprüche 18 oder 19, dadurch gekennzeichnet, daß das Halteteil (108) in eine Stapelstellung bringbar ist, in der es an dem Deckteil (106) lösbar gehalten ist.

21. Archivbox nach einem der Ansprüche 1 bis 20, dadurch gekennzeichnet, daß die Archivbox (100) mindestens ein Verbindungselement (126) zum Verbinden der Archivbox (100) mit einer in einer horizontalen Richtung neben der Archivbox (100) angeordneten weiteren Archivbox (100) umfaßt.

22. Archivbox nach Anspruch 21, dadurch gekennzeichnet, daß die Archivbox (100) mindestens eine Verbindungsausnehmung (188) zur Aufnahme eines Verbindungselements (126) aufweist.

23. Archivbox nach Anspruch 22, dadurch gekennzeichnet, daß die Archivbox (100) zusätzlich zu der Verbindungsausnehmung (188) mindestens eine Aufnahme (124) zum Aufbewahren eines nicht zur Herstellung einer Verbindung benötigten Verbindungselements (126) aufweist.

24. Archivbox nach Anspruch 23, dadurch gekennzeichnet, daß die Archivbox (100) einen Satz (138) von untereinander verbundenen Verbindungselementen (126) und einen Satz von Aufnahmen (124) aufweist, wobei die Aufnahmen (124) des Satzes von Aufnahmen (124) so relativ zueinander angeordnet sind, daß der Satz (138) von Verbindungselementen (126) unter Erhaltung der Verbindung zwischen den Verbindungselementen (126) des Satzes (138) von den Aufnahmen (124) aufnehmbar ist.

25. Archivbox nach einem der Ansprüche 23 oder 24, dadurch gekennzeichnet, daß die Aufnahmen (124) für die Verbindungselemente (126) in einem Bodenteil (102) des Archivierungsteils (228) angeordnet sind.
